# EUROPEAN PATENT APPLICATION

(11) **EP 4 610 003 A1**
(43) Date of publication of application: **03.09.2025**
(21) Application number: 22963531.3
(22) Date of filing: 28.10.2022
(51) Int. Cl.: B25J 13/00

(54) **ROBOT CONTROLLER AND METHOD FOR COMPARING CONTROL SOFTWARE BEFORE AND AFTER UPDATE**

(71) Applicant: KAWASAKI JUKOGYO KABUSHIKI KAISHA, Kobe-shi, Hyogo 650-8670 (JP)
(72) Inventor: IRIE, Kyo, Kobe-shi, Hyogo, 650-8670 (JP); SUEMOTO, Hiroki, Kobe-shi, Hyogo, 650-8670 (JP); INAYA, Yoshiki, Kobe-shi, Hyogo, 650-8670 (JP)
(74) Representative: Müller-Boré & Partner Patentanwälte PartG mbB
(86) International application number: PCT/JP2022/040417
(87) International publication number: WO 2024/089884

(57) **Abstract**

The robot controller includes a communicator, a storage, and a processor. An input signal is input to the communicator. The storage stores the control software. The processor creates the command signal including the command value for operating the robot based on the input signal and the control software. The processor reads out the past input signal and the past command signal from the storage or from external source. After updating the control software, the processor creates a confirmation command signal based on the past input signal and the control software. The processor compares the past command signal with the confirmation command signal and outputs the comparison result.

## Description

### [Technical field]

This application primarily relates to robot controllers that use control software to operate a robot.

### [Background Art]

Patent Document 1 discloses a robot controller that updates system software. The system software includes control software. The control software is used for processes such as calculating a position coordinates of a robot arm and creating command signals to be output to servo motors to operate the robot arm. The robot controller obtains new system software via an external storage and updates the system software.

### [Prior Documents]

### [Patent documents]

[Patent Document 1] JP 2008-139972 A

### [Summary of the Invention]

### [Problem to be solved by the invention]

By updating the control software, processes by which the robot controller creates command signals may change. As a result, the command signals output by the robot controller may change, which may affect the operation of the robot. Therefore, it is necessary to actually operate the robot using the updated control software to check whether the update has affected the operation of the robot. However, the confirmation process is time-consuming and places a heavy burden on the user.

The present application has been made in consideration of the above circumstances, and its main object is to provide a robot controller that can easily check an operation of a robot after updating its control software.

### [Means for solving the problems]

The problem to be solved by the present application has been described above. Next, the means for solving this problem and the effects thereof will be described.

According to a first aspect of the present application, there is provided a robot controller having the following configuration. That is, the robot controller includes a communicator, a storage, and a processor. The communicator receives an input signal including information necessary for an operation of a robot from an external source. The storage stores the control software. The processor creates a command signal including a command value for operating the robot based on the input signal and the control software. The processor reads out from the storage or from the external source a past input signal which is the input signal previously input to the communicator, and a past command signal which is a command signal created based on the past input signal. After updating the control software, the processor creates a confirmation command signal which is the command signal based on the past input signal and the control software. The processor compares the past command signal with the confirmation command signal and outputs a comparison result.

According to a second aspect of the present application, there is provided a method for comparing a control software before and after an update, as follows. That is, a past input signal which is an input signal previously input to a robot controller, and a past command signal which is a command signal created by the robot controller using a control software based on the past input signal are read out. A confirmation command signal which is the command signal based on the past input signal and the control software after updating the control software is created. The past command signal is compared with the confirmation command signal and a comparison result is output.

### Effect of the Invention

According to the present application, it is possible to easily check the operation of a robot after updating the control software.

### [Brief description of the drawings]

[FIG. 1] A block diagram of a robotic system of the present application.
[FIG. 2] An explanatory diagram showing inputs and outputs of a robot controller when a robot is in operation.
[FIG. 3] A diagram showing contents of past input signals and past command signals stored in a storage.
[FIG. 4] A flowchart showing a process for checking an operation of a robot after updating a control software without operating a robot.
[FIG. 5] An explanatory diagram showing a process of a robot controller during operation check.
[FIG. 6] A diagram showing contents of past command signals and confirmation command signal during operation check.
[Fig. 7] A flowchart showing processes for checking an operation of a robot system according to a modified example.

### [Detailed Description of the Invention]

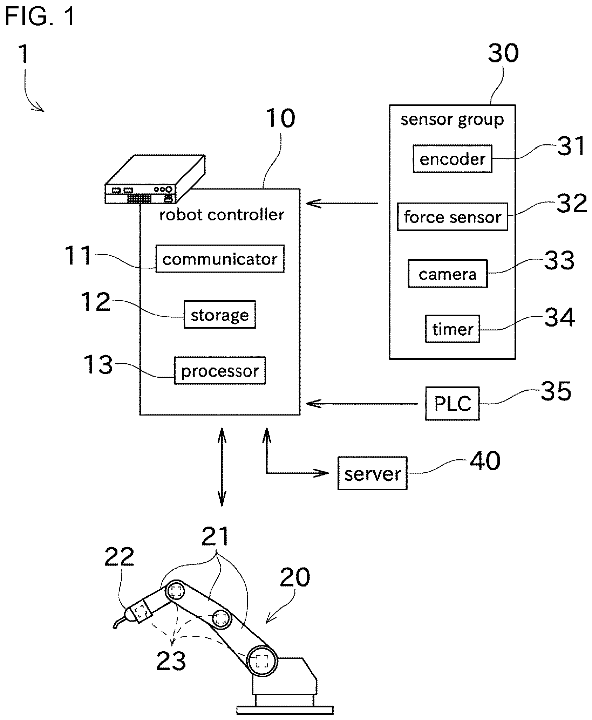

Next, an embodiment of the present application will be described with reference to the drawings. First, an overview of a robot system 1 will be described with reference to FIG 1.

The robot system 1 is a system that controls an industrial robot. An industrial robot is a robot that performs work in a workplace such as a factory or a warehouse. The industrial robot is of the teaching playback type. The teaching playback type involves teaching The industrial robot how to operate in advance, and then the industrial robot repeats the operation in accordance with the teaching. The industrial robot is, for example, a vertically articulated or horizontally articulated arm robot. The industrial robot may be a robot other than an arm robot, such as a parallel link robot. Works performed by the industrial robot are, for example, assembly, welding, painting, machine processing or transportation. Hereinafter, the industrial robot will be simply referred to as "robot 20."

As shown in FIG. 1, the robot system 1 includes a robot controller 10 and a robot 20. A sensor group 30 and a PLC 35 are also provided in the factory where the robot system 1 is installed.

The robot controller 10 includes a communicator 11, a storage 12, and a processor 13.

The communicator 11 is a wired communication module or a wireless communication module. The wired communication module is hardware used for wired communication, and includes, for example, a connector, wiring, a board for processing input and output signals, and the like. The wireless communication module is hardware used for wireless communication, and includes, for example, an antenna, a board for processing input and output signals, and the like. The communicator 11 communicates with an external device.

The storage 12 is a non-volatile memory such as a hard disk, an SSD, or a flash memory. The storage 12 stores various software and data for operating the robot system 1. The software stored in the storage 12 includes software for controlling the robot 20. Hereinafter, the software for controlling the robot 20 will be simply referred to as "control software."

The processor 13 is a processor such as a CPU. The processor 13 executes software stored in the storage 12 to perform various processes for operating the robot system 1. In particular, the processor 13 can execute control software to cause the robot 20 to operate in accordance with instructions from a user and external circumstances.

The robot 20 includes a plurality of arms 21, a work tool 22, and a plurality of motors 23. The plurality of arms 21 are rotatably connected to one another. The work tool 22 is attached to the tip of the arm 21. The work tool 22 may also be referred to as a manipulator or an end effector. When the work performed by the robot 20 is assembly or transportation, the work tool 22 is a hand that holds a workpiece. The motor 23 is configured such that rotation amount and rotation speed can be controlled. Specifically, the motor 23 rotates at the rotation amount and the rotation speed according to the input command signal. The motor 23 is, for example, a servo motor. The motor 23 is arranged on each of the plurality of arms 21. This allows each of the multiple arms 21 to operate independently. A motor 23 is arranged on the work tool 22. As a result, the work tool 22 performs work on the workpiece using the power of the motor 23. Instead of the motor 23, other actuators, for example, a cylinder or an electromagnetic solenoid, may be used.

The sensor group 30 is a collective term for a plurality of sensors that measure various information related to the work of the robot 20. The sensor group 30 includes an encoder 31, a force sensor 32, a camera 33, and a timer 34. The encoder 31 is provided for each joint of the arm 21 and measures the rotation angle of each arm 21. The force sensor 32 measures the force applied to the work tool 22. The camera 33 photographs the robot 20 or the workpiece to create an image. The timer 34 measures the time. The sensors that make up the sensor group 30 output the measurement results to the robot controller 10. The sensors included in the sensor group 30 are just examples, and some of the sensors may be omitted or other sensors may be added depending on the work content of the robot 20 or the required accuracy, etc. The number of the above-mentioned sensors is not particularly limited. For example, two or more cameras 33 may be arranged.

The PLC 35 is a programmable logic controller. The PLC 35 is connected to various sensors and operating devices. The operating device is, for example, a lever or a switch that can be operated by the user. The PLC 35 is connected to output devices such as relays. The PLC 35 switches the state of the output device depending on the state of the sensor or the operating device. For example, when the sensor detects an object or when a user operates the operating device, the PLC 35 switches the state of a relay, which is an output device. As a result, a predetermined electrical signal is output to the robot controller 10. In this embodiment, the PLC 35 is used to detect surrounding situation of the robot 20. The PLC 35 is not an essential component of the robot system 1 and can be omitted.

In this embodiment, the robot system 1 installed in the factory cooperates with a server 40 provided in a data center. The above-mentioned communicator 11 is capable of communicating with the server 40 via a management device, a router, etc. in the factory. The communicator 11 can transmit data obtained by controlling the robot 20 to the server 40 and receive data necessary for controlling the robot 20 from the server 40. The communicator 11 is capable of receiving data for updating the control software via the server 40. This allows the control software to be updated online. A method of updating the control software is not limited to online, and a storage media may be used. The server 40 may be located in the same factory as the robot controller 10, rather than in a data center. The server 40 is not an essential component of the robot system 1 and can therefore be omitted.

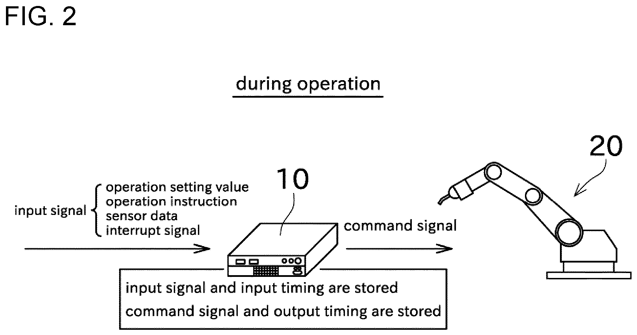

Next, the processes of the robot controller 10 while the robot system 1 is in operation will be described with reference to FIG. 2.

While the robot system 1 is operating, various input signals are input to the robot controller 10. The input signals include information necessary to cause the robot 20 to operate. The input signal is, for example, an operation setting value, an operation instruction, sensor data, or an interrupt signal.

The operation setting value is for setting value for operating the robot 20. Specifically, the operation setting value is a speed limit of the arm 21, a default speed of the arm 21, constraint conditions of the arm 21 or the work tool 22, and the like.

The operation instruction is an instruction for operating the arm 21 and the work tool 22. The operation instruction is, for example, an instruction to start an operation, an instruction to end an operation, or an instruction regarding the work content to be performed by the robot 20. The operation setting value and operation instruction may be input to the robot controller 10 manually by a user, or may be input to the robot controller 10 by another computer.

The sensor data is data indicating the detection results of each sensor in the sensor group 30. Each sensor in the sensor group 30 outputs data indicating the detection result to the robot controller 10 directly or via another device.

The interrupt signal is a signal that acts as a trigger to interrupt a state in which the robot 20 is performing a certain action or is waiting, and to cause the robot 20 to perform a different action. For example, if an abnormality occurs in the robot 20 or a surrounding device, an interrupt signal is input to the robot controller 10. In that case, the robot controller 10 brings the robot 20 to an emergency stop.

The input signals are not limited to the signals mentioned above and may include other signals. The input signal does not have to include all of the signals mentioned above. For example, the robot system 1 of this embodiment can be realized even when sensor data or interrupt signals are not used.

The processor 13 creates a command signal based on the input signal and the control software. The processor 13 executes the control software to create command signals for performing the operation that satisfy settings designated by the operation setting values and that are taught in advance at timings according to operation instructions. Since the control software itself is well known, a detailed description thereof will be omitted. When sensor data is input, the processor 13 creates a command signal according to the sensor data, that is, a command signal for operating the robot 20 according to the state detected by the sensor. When the interrupt signal is input, the processor 13 creates the command signal in response to the interrupt signal, for example a command signal for bringing the robot 20 to an emergency stop.

In this embodiment, the processor 13 stores in the storage 12 the input signal input to the robot controller 10 while the robot system 1 is in operation and input timing, which is timing at which the input signal was input.

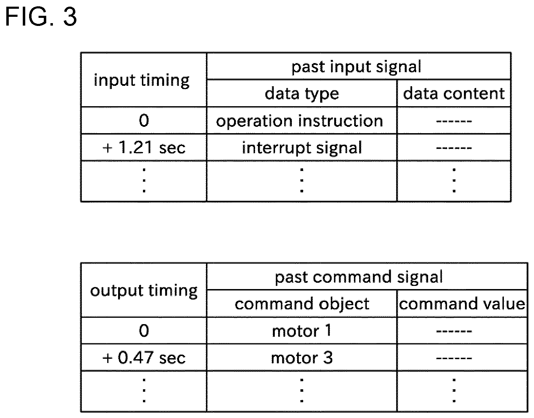

Since the robot 20 repeatedly performs a series of works, the processor 13 stores the input signal and the input timing for each series of works in the storage 12. In this embodiment, as shown in FIG. 3, a first signal input in a series of works is set as a reference time, and the elapsed time from the reference time is stored as the input timing. The method of storing the input timing is not limited to that method, and the date and time when the input signal was input may be stored as the input timing. The processor 13 may store, for example, input signals and input timings from a predetermined start time to a predetermined end time, instead of for each series of works.

The input signals stored here correspond to past log data, and are therefore hereinafter referred to as past input signals. As shown in FIG. 3, the past input signal includes a "data type" and a "data content". The data type indicates a type of input signal, for example, an operation setting value, an operation instruction, sensor data, or an interrupt signal. The data types may be further divided into smaller categories. The data content is data that indicates a specific content of the data type.

The processor 13 stores in the storage 12 the command signal output by the robot controller 10 while the robot system 1 is in operation, and output timing, which is timing at which the command signal was output.

The method of storing the output timing is the same as that of the input timing described above, and therefore the explanation will be omitted. The command signal stored here will be referred to as a past command signal hereinafter. As shown in FIG. 3, the past command signal includes a "command object" and a "command value". A command object is an object that is operated by a command signal. Specifically, it is the identification number of the motor 23 provided in the robot 20. The command value is a value for determining the rotation amount and rotation speed of the motor 23.

As will be described in detail later, the past input signal and past command signal are used to check operation after an update, which will be described later. In this embodiment, the past input signal and the past command signal are stored in the storage 12 in accordance with a preset rule. The content of the rule is not particularly limited, but for example, a rule based on the work content and memory frequency is set. For example, a rule can be set in advance to store past input signal and past command signal for the work content that the user wishes to check. The frequency with which the work content set by the rules is stored can be set. For example, the frequency of storage can be set as a rule such as once every predetermined time period or once every predetermined number of works. The above-mentioned rules are merely examples and may differ from those in this embodiment.

Instead of setting rules and automatically storing past input signals and past command signals, the storage of past input signals and past command signals may be started and ended at timing designated by the user. Alternatively, a method may be used in which all past input signals and past command signals are stored in the storage 12, and past input signals and past command signals older than a predetermined time are deleted.

The storage destination of the past input signals and the past command signals is not limited to the storage 12. For example, the processor 13 may store past input signals and past command signals in the server 40. As a result, when there are multiple robots 20 performing the same work, the past input signals and past command signals can be collected in the server 20.

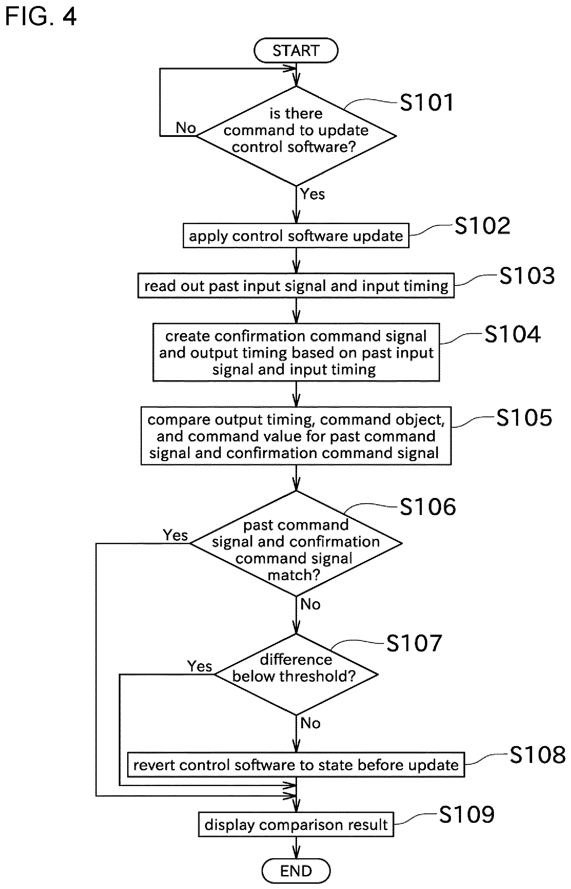

Next, processes of checking the operation of the robot 20 by the robot controller 10 alone after updating the control software will be described with reference to FIGs. 4-6. The flowchart of FIG. 4 is executed by the processor 13 when the control software becomes available for updating.

The processor 13 determines whether or not there is an instruction to update the control software (S101). When processor 13 determines that an instruction to update the control software is issued, for example, by a user operation, the processor 13 applies the update of the control software (S102).

In this embodiment, as a series of processes in conjunction with updating the control software, a check of the operation of the robot 20 accompanying the update of the control software is performed. Therefore, after the process of step S102, the processor 13 performs processes related to checking the operation of the robot 20 without requiring instruction or confirmation from the user. The processes for checking the operation of the robot 20 includes a process for comparing the control software before and after the update. First, the processor 13 reads out the past input signals and input timings stored in the storage 12 (S103).

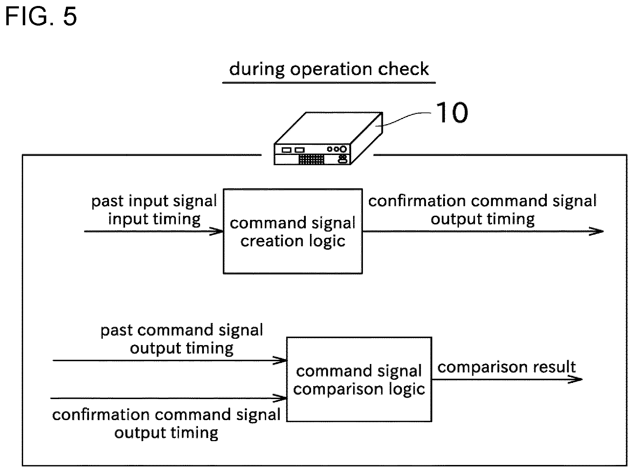

Next, as shown in FIG. 5, the processor 13 creates a confirmation command signal and an output timing based on the read past input signals and input timings (S104). The confirmation command signal and output timing will be described below. The confirmation command signal is a command signal that is created not for the purpose of operating the robot 20 but for the purpose of confirming the effect of an update of the control software. Since the control software update has been applied, the processor 13 creates the confirmation command signal by using the updated control software, the past input signals, and the input timings. There is no need to actually input the past input signals from external source to the robot controller 10, and the state in which the past input signals are input is reproduced inside the robot controller 10. Specifically, the processor 13 assumes that the first past input signal input at any timing, and performs processes of creating the first confirmation command signal based on the first past input signal. The processor 13 stores in the storage 12 the created first confirmation command signal and the output timing, which is the timing at which the first confirmation command signal becomes ready to be output. Next, the processor 13 performs processes of creating a second confirmation command signal based on a second input signal, which is delayed from the first input signal by an amount corresponding to the input timing. Similarly, the processor 13 stored the created second confirmation command signal and the output timing. By repeating the above processes, the confirmation command signal and output timing can be created.

In this embodiment, the state in which the past input signal was input is reproduced inside the robot controller 10. Alternatively, in the case where the past input signal and the input timing are stored in the server 40, the past input signal may be input from the server 40 at a timing corresponding to the input timing. Alternatively, in order to reduce the effect of line delays, the past input signals and input timings may be transmitted from the server 40 to a management device in the factory, and the past input signals may be input from the management device to the robot controller 10. In this embodiment, the confirmation command signal is not output to the external device, but the confirmation command signal may be output to the external device. For example, the confirmation command signal may be output to the management device or server 40, and the management device or server 40 may measure the output timing of the confirmation command signal.

Next, as shown in FIG. 5, the processor 13 compares the output timing, the command object, and the command value of the past command signal and the confirmation command signal (S105). The input signal and input timing for creating the confirmation command signal are the same as the input signal and input timing for creating the past command signal. The difference between the two conditions is whether or not the control software is updated. Therefore, if the update of the control software does not affect the operation of the robot 20, the output timing, the command object, and the command value for the past command signal and the confirmation command signal will be the same. However, if the logic for creating the command signal is changed due to an update of the control software, the output timing and command value may change slightly. Even if the logic for creating the command signal is not changed, slight changes in calculation speed may result in slight changes in output timing.

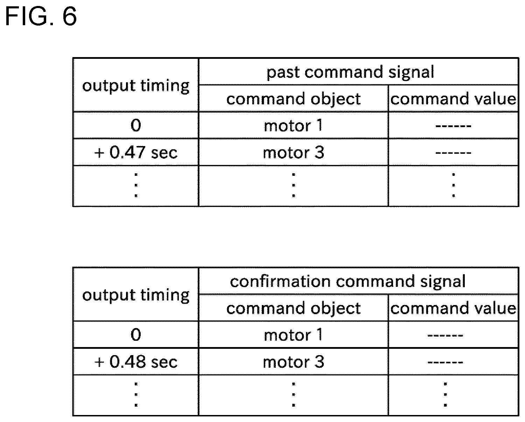

The comparison between the past command signal and the confirmation command signal is performed as follows. That is, the past command signals and the confirmation command signals are stored by classifying each command signal as shown in FIG. 6. Therefore, the processor 13 compares the output timing, the command object, and the command value for each command signal. The processor 13 determines that the past command signal and the confirmation command signal match when the output timing, command object, and command value match for all command signals for performing a series of works. On the other hand, if the output timing, command object, or command value does not match for at least one command signal, the processor 13 determines that the past command signal and the confirmation command signal do not match.

The processor 13 determines whether or not the past command signal and the confirmation command signal match (S106), and if it determines that they match, displays the comparison result (S109). The comparison results are displayed on a display connected to the robot controller 10, on a display of a portable device carried by the user, on a display of a management device, or the like. After that, with the update applied, the processor 13 ends the processes.

When the processor 13 determines that the past command signal and the confirmation command signal do not match, the processor 13 determines whether or not the difference is less than a threshold value (S107). The threshold value is set in advance and stored in the storage 12. The threshold value can be set for each of the output timing and the command value. Alternatively, the threshold may be set only for the output timing, or the threshold value may be set only for the command value. When the processor 13 determines that the difference between the past command signal and the confirmation command signal is less than the threshold value, the processor 13 displays the comparison result (S109).

When the processor 13 determines that the difference between the past command signal and the confirmation command signal is equal to or greater than the threshold value, the processor reverts the control software to the state before the update (S108) and displays the comparison result (S109). In other words, since there is a possibility that the operation of the robot 20 may change due to the control software update, the control software update is canceled. Alternatively, if the amount of difference is equal to or greater than the threshold, the comparison result may be displayed and ask the user whether or not to apply an update to the control software. In that case, the user checks the comparison result, and if the user determines that there is no problem, the user instructs to apply the update to the control software. As a result, the processor 13 ends the processes with the control software updated.

As described above, in this embodiment, the operation check is not performed by actually moving the robot 20, but is performed based on the presence or absence of a change in the command signal for moving the robot 20. If the command signal input to the robot 20 is the same, the robot 20 will perform the same operation, so that operation confirmation can be performed with high accuracy. When actually operating the robot 20, it is necessary to make the surrounding environment the same as when the robot 20 is in operation, make preparations for operating the robot 20, and take measures such as keeping people away from the robot 20, which is very time-consuming. On the other hand, in this embodiment, the operation of the robot 20 can be confirmed by calculations of the robot controller 10 or other devices, which is extremely simple compared to a method in which the robot 20 is actually operated. Therefore, for example, frequent updates of the control software can be easily accommodated.

In this embodiment, in step S104, the past input signal is input so as to reproduce the actual input timing. Alternatively, the time interval may be shortened by the same ratio and the past input signal may be input. For example, if the actual time difference between the first past input signal and the second past input signal is 500 milliseconds, and the actual time difference between the second past input signal and the third past input signal is 1000 milliseconds, the past input signals may be input at half the respective time differences, 250 milliseconds and 500 milliseconds. In this case, the output timing of the past command signal must also be compressed by the same factor before the comparison in step S105 is performed. The method of shortening the input timing is not limited to the same ratio. For example, if the time interval between past input signals exceeds 5 seconds, the time interval may be uniformly shortened to 1 second.

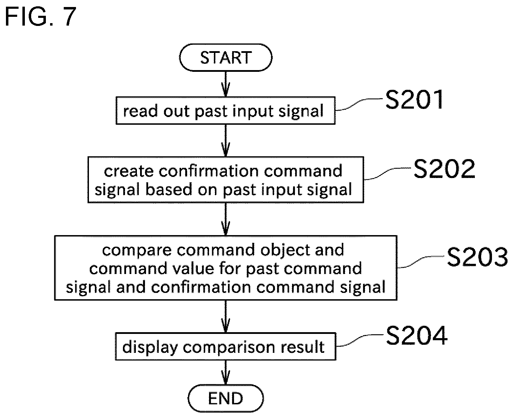

Next, a modification of this embodiment will be described. In the explanation of this modification, the same or similar components as those in the above-described embodiment are denoted by the same reference numerals in the drawings, and descriptions thereof may be omitted. FIG. 7 shows a flowchart showing processes according to the modified example.

Steps S201, S202, S203, and S204 in the flowchart of FIG. 7 correspond to steps S103, S104, S105, and S109 in the flowchart of FIG. 4, respectively. The modified example differs from the above embodiment mainly in the following two points.

The first difference is that, while in the above embodiment, the operation check is performed by updating the control software and carrying out a series of processes, in the modification, the operation check is carried out independently. That is, in this modification, the user instructs execution of the process of FIG. 7 after updating the control software. The user then checks the comparison result, and if there is no problem, maintains the update of the control software. If the user thinks that there is a problem with the comparison result, the user instructs the robot controller 10 to downgrade the version of the control software.

The second difference is that the input timing and the output timing are not taken into consideration. Depending on the work performed by the robot 20, the timing of the operation of the robot 20 may not be a problem. For example, in a situation where a collision is unlikely to occur or where there is no need to balance with other works, the operation timing of the robot 20 is unlikely to be a problem. Therefore, in the modification, it is sufficient that the storage 12 stores past input signals and past command signals and the order in which these signals were input and output, and it is not necessary for the storage 12 to store the input timing or output timing. Furthermore, the input timing is not used in creating the confirmation command signal. Therefore, no output timing for the confirmation command signal is generated. When comparing the past command signal with the confirmation command signal, the output timing is not compared.

As described above, the robot controller 10 of the above embodiment includes the communicator 11, the storage 12, and the processor 13. The communicator 11 receives the input signal including information necessary for the operation of the robot 20 from the external source. The storage 12 stores the control software. The processor 13 creates the command signal including the command value for operating the robot 20 based on the input signal and the control software. The processor 13 reads out from the storage 12 or from the external source the past input signal which is an input signal previously input to the communicator 11, and the past command signal which is a command signal created based on the past input signal. After updating the control software, the processor 13 creates the confirmation command signal which is a command signal based on the past input signal and the control software. The processor 13 compares the past command signal with the confirmation command signal and outputs the comparison result. The above is feature 1.

This makes it possible to check the operation of the robot 20 accompanying the update of the control software simply by comparing the past command signal with the confirmation command signal. Therefore, compared to the method in which the robot 20 is actually operated, the labor required can be significantly reduced. If the command signal input to the robot 20 is the same, the robot 20 performs the same operation, so there is no deterioration in the accuracy of the operation check.

In the robot controller 10 of the above embodiment, the past input signal is stored along with its input timing to the communicator 11. The past command signal is stored along with its output timing to the robot 20. The processor 13 creates the confirmation command signal based on the past input signal input in accordance with the input timing and the updated control software. The processor 13 compares the past command signal with the confirmation command signal while taking into consideration the output timing, and outputs the comparison result. The above is feature 2.

This makes it possible to check the operation of the robot 20, including the output timing. Therefore, even when the robot 20 is performing the work in which the operation timing is important, the operation of the robot 20 can be checked.

In the robot controller 10 of the above embodiment, the processor 13 compares the contents of the command value of the past command signal with the contents of the command value of the confirmation command signal, and further compares the output timing of the command value of the past command signal with the output timing of the command value of the confirmation command signal, and outputs the comparison result. The above is feature 3.

This makes it possible to check the operation of the robot 20, including both the command value and the output timing. Therefore, even when the robot 20 performs the work in which both the posture and the operation timing of the robot 20 are important, the operation of the robot 20 can be checked.

In the robot controller 10 of the above embodiment, the processor 13 may input the past input signal at a time interval shorter than the input timing of the past input signal to create the confirmation command signal. The above is feature 4.

This makes it possible to shorten the time required to check the operation of the robot 20 compared to reproducing the actual input timing.

In the robot controller 10 of the above embodiment, when the instruction to start updating the control software is received from the user, the processor 13 performs the series of processes, including updating the control software and comparing the confirmation command signal based on the updated control software with the past command signal. The above is feature 5.

Since the purpose of this embodiment is to check the operation of the robot 20 following the update of the control software, by performing these as the series of processes, the process can proceed smoothly.

In the robot controller 10 of the above embodiment, if the past command signal and the confirmation command signal match, or if the difference between the past command signal and the confirmation command signal is less than the threshold value, the processor 13 completes the update of the control software. If the difference between the past command signal and the confirmation command signal is equal to or greater than the threshold value, the processor 13 waits for the completion of the update of the control software. The above is feature 6.

This allows the operation check of the robot 20 accompanying the update of the control software to proceed more smoothly.

In the robot controller 10 of the above embodiment, the processor 13 does not output the confirmation command signal to the robot 20, but compares the past command signal with the confirmation command signal and outputs the comparison result. The above is feature 7.

This makes it possible to check the operation of the robot 20 without actually operating the robot 20.

The above-mentioned features 1 to 7 can be appropriately combined as long as no contradiction occurs. For example, feature N (N = 1, 2, ..., 7) can be appropriately combined with at least one of features 1 to N-1.

In the above embodiment, the control software before and after the update is compared in the following manner. First, the past input signal which is input signal previously input to the robot controller 10, and past command signal which is command signal created by the robot controller 10 using the control software based on the past input signal, are read out. Next, after the control software is updated, the confirmation command signal is created which is the command signal based on the past input signal and the control software. Then, the past command signal and the confirmation command signal are compared, and the comparison result is output.

Although the preferred embodiment of the present application has been described above, the above configuration can be modified, for example, as follows.

In the above embodiment, the robot controller 10 outputs only the command signal, but the robot controller 10 may also output a notification signal in addition to the command signal. The notification signal is a signal for notifying the outside of the operating status, etc. of the robot 20. The processor 13 may check the operation of the notification signal in addition to the command signal.

The flowcharts shown in the above embodiment are merely examples, and some processes may be omitted, the contents of some processes may be changed, or new processes may be added. For example, step S107 in the flowchart of FIG. 4 may be omitted, and the update of the control software may be enabled only when the past command signal and the confirmation command signal match.

In the above embodiment, all of the processes described in the flowcharts of FIGS. 4 and 7 are performed by the processor 13, but at least a part of the processes may be performed by other hardware, for example, a computer inside or outside the factory. For example, all data collected by the robot controller 10 may be collected in the server 40, and the server 40 may perform the comparison process.

The functionality of the elements disclosed herein may be implemented using circuitry or processing circuitry which includes general purpose processors, special purpose processors, integrated circuits, ASICs (Application Specific Integrated Circuits), conventional circuitry and/or combinations thereof which are configured or programmed to perform the disclosed functionality. Processors are considered as processing circuitry or circuitry as they include transistors and other circuitry therein. In the disclosure, the circuitry, units, or means are hardware that carry out the recited functionality, or are hardware programmed to perform the recited functionality. The hardware may be any hardware disclosed herein or otherwise may be other known hardware which is programmed or configured to carry out the recited functionality. When the hardware is a processor which may be considered as a type of circuitry, the circuitry, means, or units are a combination of hardware and software, the software being used to configure the hardware and/or processor.

## Claims

1. A robot controller comprising:
a communicator that receives an input signal including information necessary for an operation of a robot from an external source;
a storage that stores a control software; and
a processor that creates a command signal including a command value for operating the robot based on the input signal and the control software, wherein
the processor reads out from the storage or from the external source a past input signal which is the input signal previously input to the communicator, and a past command signal which is a command signal created based on the past input signal,
after updating the control software, the processor creates a confirmation command signal which is the command signal based on the past input signal and the control software, and
the processor compares the past command signal with the confirmation command signal and outputs a comparison result.

2. The robot controller according to claim 1, wherein
the past input signal is stored along with its input timing to the communicator,
the past command signal is stored along with its output timing to the robot,
the processor creates the confirmation command signal based on the past input signal input in accordance with the input timing and the updated control software, and
the processor compares the past command signal with the confirmation command signal while taking into consideration the output timing, and outputs the comparison result.

3. The robot controller according to claim 2, wherein
the processor compares a content of the command value of the past command signal with a content of the command value of the confirmation command signal, and further compares the output timing of the command value of the past command signal with the output timing of the command value of the confirmation command signal, and outputs the comparison result.

4. The robot controller according to claim 1, wherein
the processor inputs the past input signal at a time interval shorter than the input timing of the past input signal to create the confirmation command signal.

5. The robot controller according to claim 1, wherein
when an instruction to start updating the control software is received from an user, the processor performs a series of processes, including updating the control software and comparing the confirmation command signal based on the updated control software with the past command signal.

6. The robot controller according to claim 1, wherein
if the past command signal and the confirmation command signal match, or if a difference between the past command signal and the confirmation command signal is less than a threshold value, the processor completes an update of the control software, and
if the difference between the past command signal and the confirmation command signal is equal to or greater than the threshold value, the processor waits for the completion of the update of the control software.

7. The robot controller according to claim 1, wherein
the processor does not output the confirmation command signal to the robot, but compares the past command signal with the confirmation command signal and outputs the comparison result.

8. A method for comparing a control software before and after update comprising:
reading out a past input signal which is an input signal previously input to a robot controller, and a past command signal which is a command signal created by the robot controller using a control software based on the past input signal;
creating a confirmation command signal which is the command signal based on the past input signal and the control software after updating the control software; and
comparing the past command signal and the confirmation command signal and outputting a comparison result.
